# FASCICULE DE BREVET EUROPEEN

(11) **EP 3 077 189 B1**
(45) Date de publication et mention de la délivrance du brevet: **23.09.2020**
(21) Numéro de dépôt: 14815010.5
(22) Date de dépôt: 28.11.2014
(51) Int. Cl.: B23P 15/24, B24C 1/04, B29C 33/38, B29D 30/06

(54) **PROCÉDÉ DE DÉCOUPE DE SECTEURS POUR MOULES DE PNEUMATIQUES ET ÉLÉMENT SEMI-FINI POUR FOURNIR DES SECTEURS D'UN MOULE POUR MOULAGE POUR PNEUMATIQUES**
VERFAHREN ZUM SCHNEIDEN VON SEKTOREN FÜR REIFENFORMEN UND HALBFERTIGES ELEMENT ZUM ZUFÜHREN VON ABSCHNITTEN EINER FORM ZUM FORMEN VON REIFEN
METHOD FOR CUTTING SECTORS FOR TYRE MOULDS AND SEMI-FINISHED ELEMENT FOR SUPPLYING SECTORS OF A MOULD FOR MOULDING TYRES

(30) Priorité: 06.12.2013 FR 1302850
(43) Date de publication de la demande: 12.10.2016
(73) Titulaire: Compagnie Générale des Etablissements Michelin, 63000 Clermont-Ferrand (FR)
(72) Inventeur: LEPRETRE, Jérôme, 63040 Clermont-Ferrand Cedex 9 (FR); ANDANSON, Patrick, 63040 Clermont-Ferrand Cedex 9 (FR); SEGOVIANO, Enrique, 63040 Clermont-Ferrand Cedex 9 (FR)
(74) Mandataire: Roussy, Delphine
(86) Numéro de dépôt international: PCT/IB2014/002591
(87) Numéro de publication internationale: WO 2015/082969

(56) Documents cités:
- EP-A1- 1 529 627
- EP-A1- 1 717 003
- EP-A1- 2 399 730
- WO-A2-2010/027251
- CN-A- 101 224 541
- CN-A- 102 000 951
- GB-A- 2 342 604
- JP-A- H0 820 026
- US-A1- 2008 084 017

## Description

### DOMAINE TECHNIQUE DE L'INVENTION

La présente invention concerne un procédé de fabrication d'éléments moulants pour moules destinés au moulage de pneumatiques pourvus d'une bande de roulement comportant un agencement circonférentiel de motifs de sculpture. Elle concerne plus particulièrement une phase de découpe visant à séparer une pluralité de secteurs obtenus conjointement lors d'une opération de moulage.

### ETAT DE LA TECHNIQUE ANTERIEURE

La fabrication des moules de pneumatique et des composants de ces moules implique une grande variété d'étapes, souvent de grande complexité, et des coûts élevés de réalisation ainsi que de matériau. Il est par ailleurs essentiel que tous les composants intégrés aux moules puissent bénéficier d'un haut niveau de précision, rendant les opérations de conception et réalisation de moules particulièrement délicates.

Pour optimiser les processus sans que la qualité soit affectée, toutes les pièces constituantes des moules et toutes les opérations et étapes intermédiaires doivent être considérées.

Il existe donc un besoin pour optimiser le processus de réalisation des moules et des différents éléments constituants des moules, tout en assurant un haut niveau de qualité de moulage et une grande souplesse des modes de fabrication.

On connaît par ailleurs le document GB 2342604, qui décrit un gabarit de positionnement de pièce pour machines-outils. Ce gabarit comprend un corps de montage comportant une partie de positionnement destinée à être mise en contact avec une pièce et une portion d'appui qui fait saillie vers le bas. Une tige verticale s'étend à travers la partie de positionnement et la portion d'appui. Cette tige comporte à son extrémité inférieure un élément de renfort en forme de U.

Le document JP19940149993 concerne un moule avec pièces à forte dureté, à bonne durabilité et à maintenance simple. Une pluralité d'éléments sont montés dans un secteur de support pour constituer un segment. Les pièces sont disposées de manière contiguë de sorte que les faces respectivement attenantes des pièces sont en contact les unes avec les autres.

Le document EP2399730 décrit un moule dans lequel un bloc est solidement fixé, et qui peut être démonté même après avoir été utilisé. Ce moule pour pneumatique comporte une surface de cavité formée dans une surface intérieure du moule. Ce moule comprend un bloc ayant une pluralité d'éléments en forme de plaques et qui sont alignées avec des fentes formées entre chacune des plaques. Le moule comporte également un support qui contient un évidement permettant au bloc d'être monté, et un élément de fixation qui est fixé de manière amovible au bloc et monté dans l'évidement.

Le document US2008/0084017 concerne des blocs assemblés afin de fournir une pluralité de points de fixation pour permettre une fixation à une table de travail de machine de fraisage et à d'autres blocs permettant différents serrages autour de la pièce à travailler. Par ailleurs des pinces, des attaches, des blocs et des écrous en « T » et différents outillages de maintien peuvent être utilisés. Aucune plaque de montage supplémentaire ou tout autre type de matériel préparatoire n'est requis pour monter l'ensemble des blocs sur la table de fraisage ou toute autre table de travail où un espace de fixation des blocs est prévu.

Un autre moule de vulcanisation de pneumatiques est décrit dans la demande CN 101224541 A.

Dans ces documents, malgré la diversité des solutions présentées, aucune ne permet d'optimiser la fabrication des secteurs de moules pour pneumatiques en prenant en compte d'une part les exigences requises pour le moule lui-même, et d'autre part les exigences multiples et variées au niveau des pneumatiques à mouler.

### EXPOSE DE L'INVENTION

Un objet de l'invention consiste à fabriquer des secteurs de moules de pneumatiques de façon économique, avec une grande précision, tout en minimisant les pertes de matière.

Un autre objet de l'invention consiste à prévoir un procédé de fabrication permettant de réduire les pertes de matières premières lors des modifications des caractéristiques visuelles des pneumatiques.

Encore un autre objet consiste à prévoir un procédé permettant d'optimiser la fabrication des pneumatiques, en particulier au niveau de la phase de préparation des moules.

Pour ce faire, selon la revendication 1, l'invention prévoit un procédé de découpe pour élément de moulage semi-fini destiné à fournir des secteurs d'un moule pour moulage et vulcanisation de pneumatiques, ledit élément de moulage comportant une pluralité de secteurs issus d'une même opération de moulage, ledit élément de moulage comportant au moins une paire de membres de fixation mâles de chaque côté d'une face de moulage prévue pour former les sculptures de la bande de roulement du pneumatique à mouler, ledit procédé comportant les étapes suivantes :
- alignement et indexation de l'élément de moulage semi-fini sur le support de fixation à l'aide de repères d'indexation ;
- bridage de l'élément de moulage semi-fini sur un support de fixation pourvu de membres de fixation femelles correspondants à ceux de l'élément de moulage au moyen des membres de fixation mâles et femelles ;
- pose du support de fixation sur une machine de découpe ;
- découpe des secteurs par la machine de découpe.

Le procédé est particulièrement avantageux pour l'obtention d'un positionnement précis de l'élément de moulage, de façon à procéder aux découpes avec précision, à partir d'une bonne indexation de la pièce et des zones de découpe.

Selon un mode de réalisation avantageux, les membres de fixation mâles sont des plots comportant des découpes en forme de queue d'aronde s'étendant radialement intérieurement des éléments de moulage.

Selon un autre mode de réalisation avantageux, les membres de fixation femelles comportent des découpes en forme de queue d'aronde s'étendant radialement intérieurement des éléments de moulage.

L'agencement des membres de fixation en formes complémentaires de queue d'aronde produit un excellent maintien de la pièce fixée.

Selon une variante de réalisation avantageuse, les repères d'indexation du support de fixation comprennent au moins deux blocs d'indexation pourvus d'une encoche d'indexation précisément localisée par rapport au support.

De manière avantageuse, les repères d'indexation de l'élément de moulage semi-fini comprennent un doigt d'indexation pour insertion dans l'encoche du bloc d'indexation du support.

On obtient de ce fait une façon simple, fiable et économique d'obtenir des moyens d'indexation conférant un bon niveau de précision. En variante, les doigts d'indexation sont de dimensions et/ou formes différentes de chaque côté, de façon à permettre un positionnement dans un seul sens.

Selon un mode de réalisation avantageux, la découpe est effectuée à l'aide d'un jet d'eau à très haute pression.

Selon un mode de réalisation avantageux, le procédé comporte par ailleurs une étape d'usinage, après l'étape de découpage, dans laquelle le surplus de matière entre les secteurs est retiré. Lors d'une étape d'usinage d'un secteur, ce dernier est fixé à une machine d'usinage au moyen de membres de fixation pourvu de découpes en forme de queue d'aronde.

La divulgation concerne aussi un support de fixation pour la mise en œuvre du procédé de découpe préalablement décrit, comportant un cadre de maintien, au moins deux blocs d'indexation pourvus de surfaces d'appui et d'encoches d'indexation, et au moins deux membres de fixation femelles aptes à coopérer avec des membres de fixation mâles correspondant de l'élément de moulage.

De manière avantageuse, les membres de fixation femelles comportent des découpes en forme de queue d'aronde.

L'invention prévoit également un élément de moulage semi-fini destiné à fournir des secteurs d'un moule pour moulage et vulcanisation de pneumatiques selon la revendication 9 comprenant :
- une face de moulage, comportant des motifs destinés au moulage des sculptures d'une bande de roulement de pneumatique ;
- des membres de fixation, de chaque côté de la face de moulage ;
- des éléments d'indexation;
- une pluralité des secteurs destinés à être découpés les uns des autres à l'aide du procédé de découpe préalablement décrit.

Dans un mode de réalisation avantageux, chaque secteur comporte une paire de membres de fixation prévue pour fixer individuellement chaque secteur sur une machine d'usinage pour une étape d'usinage après découpe.

Ainsi, avant découpage, l'élément de moulage est pourvu d'une pluralité de paires de membres de fixations, dont une prévue pour fixer ledit élément de moulage au support de la machine de découpe. Après découpage des secteurs, chacun d'entre eux porte une paire de membres de fixation, pour attacher chaque secteur à une machine d'usinage.

Selon encore un mode de réalisation avantageux, chaque secteur comporte une paire de surfaces de référence prévues pour coopérer avec les surfaces d'appui des blocs d'indexation.

### DESCRIPTION DES FIGURES

D'autres caractéristiques et avantages de l'invention ressortiront de la description suivante, donnée à titre d'exemple, sans caractère limitatif, en regard des dessins annexés sur lesquels :
- la figure 1 représente schématiquement, à l'aide d'une vue en perspective, les principaux éléments permettant de fixer un élément de moulage semi-fini en vue de permettre une ou plusieurs opérations de découpage de secteurs destinés à des moules de pneumatiques;
- la figure 2 est une représentation schématique vue de face des éléments de la figure 1 ;
- la figure 3 illustre une représentation schématique en perspective d'un exemple de secteur après découpage ;
- la figure 4 illustre une représentation schématique agrandie de la figure 3 montrant plus particulièrement un membre de fixation d'un secteur ;
- la figure 5 est une représentation schématique en perspective d'un exemple de membre de fixation femelle ;
- la figure 6 est une représentation schématique en perspective d'un exemple de bloc d'indexation ;
- la figure 7 présente un exemple de barre d'indexation ;
- la figure 8 montre un exemple de phase de découpe sur une machine à jet d'eau à très haute pression.

Dans la description qui va suivre, des éléments sensiblement identiques ou similaires seront désignés par des références identiques.

### DESCRIPTION DETAILLE DE L'INVENTION

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « sculpture », on entend les agencements surfaciques et volumiques de mélanges caoutchoutiques à la surface externe du pneumatique prévus pour assurer le contact avec la surface de roulage, et dont la forme permet d'ajuster les performances opérationnelles du pneumatique. Les sculptures permettent aussi de conférer un aspect esthétique à la bande de roulement ou autre zone du pneumatique tel que les flancs.

Par « moule », on entend un ensemble d'éléments de moule séparés qui, par rapprochement relatif, permettent de délimiter un espace de moulage toroïdal pour la vulcanisation et le moulage d'un pneumatique.

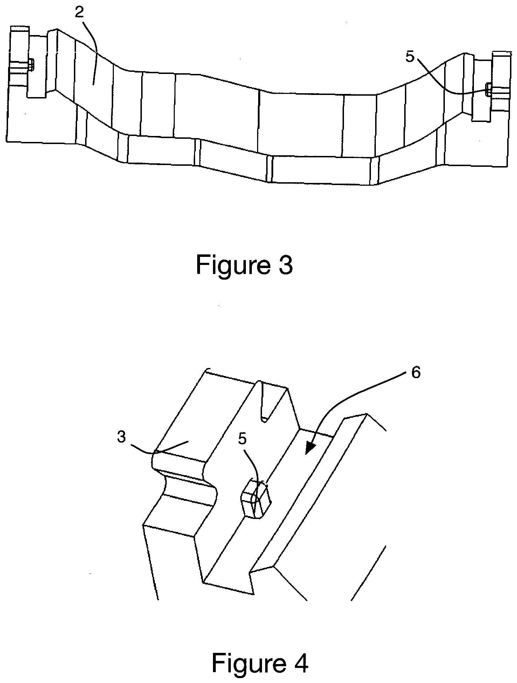

La figure 3 illustre un exemple d'un secteur 2 utilisé dans un moule permettant d'assurer le moulage et la vulcanisation de pneumatiques. Un tel secteur, de forme sensiblement allongée comporte, à chacune des ses extrémités, un membre de fixation mâle 3 présentant une découpe en forme de queue d'aronde, mieux visible dans la vue en perspective de la figure 4.

L'utilisation de ce type de secteur dans un procédé de moulage et vulcanisation de pneumatiques confère une grande souplesse dans la configuration des moules. En effet, il est possible de prévoir qu'un secteur correspond à un motif de la bande de roulement du pneumatique à mouler. En utilisant des éléments moulants avec des motifs différents, on peut adapter ou modifier l'architecture de la bande de roulement sans devoir remplacer tout le moule.

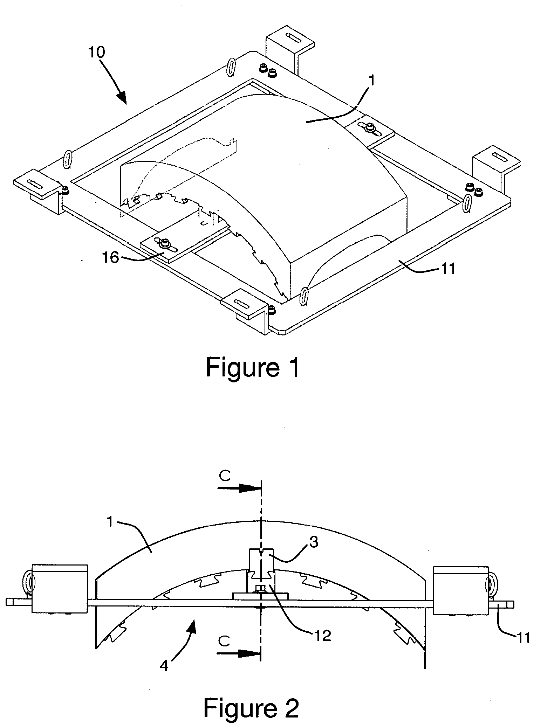

Par ailleurs, la fabrication simultanée d'une pluralité d'éléments moulants permet d'optimiser le processus de fabrication, avec une simplification de l'outillage et une réduction des pertes de matière. Pour fabriquer ces secteurs de façon économique, on produit d'abord, par moulage, un élément de moulage semi-fini 1 tel que celui illustré dans l'exemple de la figure 1. Un tel élément de moulage semi-fini comporte une pluralité de secteurs 2 qu'il convient de séparer les uns des autres. Dans ce qui suit, le procédé proposé préconise d'effectuer la découpe au niveau de la jonction entre deux secteurs adjacents, autant de fois que nécessaire, en fonction du nombre de secteurs. La phase de découpe peut être effectuée à l'aide d'un ou plusieurs jets d'eau à très haute pression, ou par tout autre moyen permettant de découper avec précision, rapidité et répétabilité.

Après les opérations de découpe, des opérations d'usinage permettent l'enlèvement des portions de matière non utiles pour les opérations de moulage et la réalisation d'éventuelles zones additionnelles sur les secteurs.

Pour atteindre le niveau de précision requis lors de la découpe, il est indispensable de pouvoir repérer l'élément de moulage semi-fini 1 et les plans de découpe, de pouvoir positionner les outils de découpe de façon précise par rapport à ces plans de découpe et surtout de s'assurer que l'élément de moulage est fixé de façon très solide afin de résister aux nombreuses et intenses sollicitations mécaniques générées par les opérations de découpage.

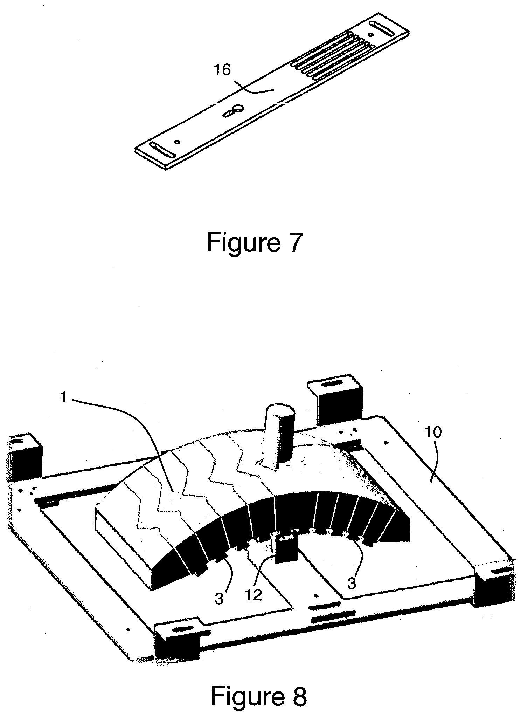

L'invention propose d'utiliser un support de fixation 10 tel que celui illustré par exemple aux figures 1 et 2. Le support de fixation 10 comporte un cadre de maintien 11 sur lequel l'élément de moulage semi-fini 1 est positionné et indexé afin d'effectuer les découpes en alignement le plus précis possible avec les plans de découpe. Le cadre de fixation illustré présente un profil sensiblement carré. Au milieu d'un des côtés, une barre d'indexation 16 (présentée en détails à la figure 7) est fixée au cadre 11. Dans l'exemple illustré, deux membres de fixation femelles 12 sont prévus, soit un de chaque côté de l'élément de moulage 1, vis-à-vis des membres de fixation mâles 3 de l'élément de moulage 1. Les deux membres de fixation femelles 12 sont fixés à la barre 16, dont un par l'entremise de glissières longitudinales, permettant de positionner longitudinalement le moyen de fixation femelle 12 au bon endroit, en fonction des dimensions de l'élément de moulage 1.

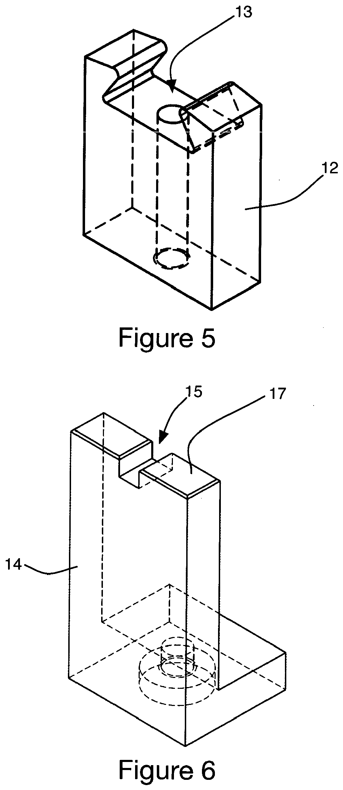

La figure 5 montre un exemple de membre de fixation femelle 12 pourvu d'une découpe en forme de queue d'aronde 13 à l'une de ses extrémités.

L'élément de moulage semi-fini 1 est placé sur le cadre de maintien 11 avec la face de moulage 4 vers le cadre. Cette disposition permet de prévoir un bridage de l'élément de moulage 1 par l'entremise des membres de fixation mâles 3. Les profils complémentaires en forme de queue d'aronde permettent de réaliser un emboîtage précis et résistant de la pièce fixée, procurant une bonne résistance aux efforts axiaux et transversaux afin de maintenir le bon positionnement des pièces respectives tout au long du processus de découpage des secteurs 2, ce processus étant susceptible de générer d'importants efforts.

La figure 4 est une vue en perspective agrandie d'un exemple de doigt d'indexation 5 placé contre la base d'un membre de fixation mâle 3, également visible à la figure 3. Les doigts d'indexation permettent de prévoir un positionnement précis des secteurs, soit lors de la phase de découpage et/ou lors d'une phase ultérieure de moulage/vulcanisation dans un moule pour pneumatique pourvu d'une pluralité de secteurs alignés circonférentiellement. Les figures 7 et 8 illustrent un exemple de bloc d'indexation 14 pourvu d'une encoche d'indexation 15 correspondant à un doigt 5. On dispose avantageusement un bloc 14 à chaque extrémité du secteur, préférentiellement de façon adjacente aux membres de fixation mâle par lesquels l'élément de moulage est fixé au cadre de maintien 11. Les doigts 5 et encoches 15 de chaque côté d'un même secteur peuvent être de dimension et/ou forme différente afin d'assurer un montage dans un seul sens si cela est requis.

### LE PROCEDE

Grâce au support de fixation préalablement décrit, un procédé de découpe pour élément de moulage semi-fini 1 peut être effectué de façon optimale. Selon le procédé de l'invention, on effectue le bridage de l'élément de moulage semi-fini 1 sur le support de fixation 10 au moyen des membres de fixation mâles 3 et femelles 12 correspondants. Les repères d'indexation 14 et 15 permettent d'effectuer l'alignement et l'indexation de l'élément de moulage semi-fini 1 sur le support de fixation 10. La surface de référence 6 de chaque côté de chaque secteur permet un appui bien positionné sur une surface d'appui 17 des repères d'indexation 14. Une fois l'élément de moulage 1 en place sur le support 10 avec les moyens de bridage engagés les uns dans les autres, l'élément de moulage étant bien aligné par rapport au support, l'ensemble est posé sur une machine de découpe spécialement adaptée, de préférence une machine de découpe au jet d'eau à très haute pression.

La découpe des secteurs 2 est ensuite effectuée de façon efficace et sûre du fait du bridage solide de l'élément à découper qui peut subir les efforts dus à la coupe sans risque de désalignement ou de désassemblage. La figure 8 montre un exemple de découpe à l'aide d'une buse projetant un jet d'eau (contenant avantageusement des particules abrasives telles que du sable) le long des lignes de découpes entre les secteurs.

Pour faciliter la réalisation des découpes multiples, celles-ci sont de préférence effectuées de façon à laisser une zone ou une couche de matière entre les secteurs découpés. Cette couche est suffisante pour permettre à l'ensemble de l'élément de moulage 1 de conserver sa forme galbée initiale pendant toutes les découpes. La quantité de matière conservée est cependant suffisamment mince pour que les secteurs puissent aisément être séparés les uns des autres après désassemblage du support de la machine de coupe.

## Revendications

1. Procédé de découpe pour élément de moulage semi-fini (1) destiné à fournir des secteurs (2) d'un moule pour moulage et vulcanisation de pneumatiques, ledit élément de moulage (1) comportant une pluralité de secteurs (2) issus d'une même opération de moulage, ledit élément de moulage (1) comportant au moins une paire de membres de fixation mâles (3) de chaque côté d'une face de moulage (4) prévue pour former les sculptures de la bande de roulement du pneumatique à mouler, ledit procédé comportant les étapes suivantes :
- alignement et indexation de l'élément de moulage semi-fini (1) sur le support de fixation (10) à l'aide de repères d'indexation (14, 15) ;
- bridage de l'élément de moulage semi-fini (1) sur un support de fixation (10) pourvu de membres de fixation femelles (12) correspondants à ceux de l'élément de moulage (10), au moyen des membres de fixation mâles (3) et femelles (12) ;
- pose du support de fixation (10) sur une machine de découpe ;
- découpe des secteurs (2) les uns des autres, au niveau de la jonction entre deux secteurs adjacents, par la machine de découpe.

2. Procédé de découpe selon la revendication 1, dans lequel les membres de fixation mâles (3) sont des plots comportant des découpes en forme de queue d'aronde s'étendant radialement intérieurement des éléments de moulage (1).

3. Procédé de découpe selon l'une des revendications 1 ou 2, dans lequel les membres de fixation femelles (12) comportent des découpes en forme de queue d'aronde s'étendant radialement intérieurement des éléments de moulage (1).

4. Procédé de découpe selon l'une des revendications 1 à 3, dans lequel les repères d'indexation du support de fixation (10) comprennent au moins deux blocs d'indexation (14) pourvus d'une encoche d'indexation (15) précisément localisée par rapport au support (10).

5. Procédé de découpe selon la revendication 4, dans lequel les repères d'indexation de l'élément de moulage semi-fini (1) comprennent un doigt d'indexation (5) pour insertion dans l'encoche (15) du bloc d'indexation (14) du support (10).

6. Procédé de découpe selon l'une des revendications 1 à 5, dans lequel la découpe des secteurs est effectuée à l'aide d'un jet d'eau à très haute pression.

7. Procédé de découpe selon l'une des revendications 1 à 6, comportant par ailleurs une étape d'usinage, après l'étape de découpage, dans laquelle le surplus de matière entre les secteurs est retiré.

8. Procédé de découpe selon la revendication 7, dans lequel, lors de l'étape d'usinage d'un secteur, ce dernier est fixé à la machine d'usinage au moyen de membres de fixation (3) pourvu de découpes en forme de queue d'aronde.

9. Elément de moulage semi-fini (1) comprenant :
- une face de moulage (4), comportant des motifs destinés au moulage des sculptures d'une bande de roulement de pneumatique ;
- des membres de fixation (3), de chaque côté de la face de moulage ;
- des doigts d'indexation (5);
- une pluralité des secteurs (2) d'un moule pour moulage et vulcanisation de pneumatiques, deux secteurs adjacents étant reliés par une jonction, lesdits secteurs étant destinés à être découpés les uns des autres à l'aide du procédé de découpe selon l'une des revendications 1 à 8.

10. Elément de moulage semi-fini (1) selon la revendication 11, dans lequel chaque secteur (2) comporte une paire de membres de fixation (3) prévue pour fixer individuellement chaque secteur sur une machine d'usinage pour une étape d'usinage après découpe.

11. Elément de moulage semi-fini (1) selon l'une des revendications 11 ou 12, dans lequel chaque secteur (2) comporte une paire de surfaces de référence (6) prévues pour coopérer avec les surfaces d'appui (17) des blocs d'indexation (14).

## Patentansprüche

1. Schneideverfahren für ein halbfertiges Formelement (1), das dazu bestimmt ist, Sektoren (2) einer Form zum Formen und Vulkanisieren von Luftreifen zu liefern, wobei das Formelement (1) eine Vielzahl von Sektoren (2) aufweist, die aus einem gleichen Formvorgang hervorgehen, wobei das Formelement (1) mindestens ein Paar von Einsteck-Befestigungsgliedern (3) auf jeder Seite einer Formseite (4) aufweist, die vorgesehen ist, um die Profile des Laufstreifens des zu formenden Luftreifens zu bilden, wobei das Verfahren die folgenden Schritte aufweist:
- Ausrichtung und Indizierung des halbfertigen Formelements (1) auf dem Befestigungsträger (10) mit Hilfe von Indizierungsmarkierungen (14, 15);
- Klemmen des halbfertigen Formelements (1) auf einen mit Aufnahme-Befestigungsgliedern (12) entsprechend denjenigen des Formelements (10) versehenen Befestigungsträger (10) mittels der Einsteck- (3) und Aufnahme-Befestigungsglieder (12);
- Verlegen des Befestigungsträgers (10) auf einer Schneidemaschine;
- Abschneiden der Sektoren (2) voneinander im Bereich der Verbindungsstelle zwischen zwei benachbarten Sektoren durch die Schneidemaschine.

2. Schneideverfahren nach Anspruch 1, wobei die Einsteck-Befestigungsglieder (3) Blöcke sind, die schwalbenschwanzförmige Ausschnitte aufweisen, die sich radial innerhalb der Formelemente (1) erstrecken.

3. Schneideverfahren nach einem der Ansprüche 1 oder 2, wobei die Aufnahme-Befestigungsglieder (12) schwalbenschwanzförmige Ausschnitte aufweisen, die sich radial innerhalb der Formelemente (1) erstrecken.

4. Schneideverfahren nach einem der Ansprüche 1 bis 3, wobei die Indizierungsmarkierungen des Befestigungsträgers (10) mindestens zwei Indizierungsblöcke (14) enthalten, die mit einer Indizierungskerbe (15) versehen sind, die bezüglich des Trägers (10) präzise lokalisiert ist.

5. Schneideverfahren nach Anspruch 4, wobei die Indizierungsmarkierungen des halbfertigen Formelements (1) einen Indizierungsfinger (5) zum Einführen in die Kerbe (15) des Indizierungsblocks (14) des Trägers (10) enthalten.

6. Schneideverfahren nach einem der Ansprüche 1 bis 5, wobei das Ausschneiden der Sektoren mit Hilfe eines Wasserstrahls unter sehr hohem Druck ausgeführt wird.

7. Schneideverfahren nach einem der Ansprüche 1 bis 6, das außerdem einen Schritt der maschinellen Bearbeitung nach dem Schneideschritt aufweist, bei dem der Materialüberschuss zwischen den Sektoren entfernt wird.

8. Schneideverfahren nach Anspruch 7, wobei im Schritt der maschinellen Bearbeitung eines Sektors letzterer mittels Befestigungsgliedern (3) an der Maschine zur maschinellen Bearbeitung befestigt wird, die mit schwalbenschwanzförmigen Ausschnitten versehen sind.

9. Halbfertiges Formelement (1), das enthält:
- eine Formseite (4), die zum Formen der Profile eines Laufstreifens des Luftreifens bestimmte Muster aufweist;
- Befestigungsglieder (3) auf jeder Seite der Formseite;
- Indizierungsfinger (5);
- eine Vielzahl von Sektoren (2) einer Form zum Formen und Vulkanisieren von Luftreifen, wobei zwei benachbarte Sektoren durch eine Verbindungsstelle verbunden sind, wobei die Sektoren dazu bestimmt sind, mit Hilfe des Schneideverfahrens nach einem der Ansprüche 1 bis 8 voneinander abgeschnitten zu werden.

10. Halbfertiges Formelement (1) nach Anspruch 11, wobei jeder Sektor (2) ein Paar von Befestigungsgliedern (3) aufweist, das vorgesehen ist, um jeden Sektor einzeln auf einer Maschine zur maschinellen Bearbeitung für einen Schritt der maschinellen Bearbeitung nach dem Schneiden zu befestigen.

11. Halbfertiges Formelement (1) nach einem der Ansprüche 11 oder 12, wobei jeder Sektor (2) ein Paar von Bezugsflächen (6) aufweist, die vorgesehen sind, um mit den Auflageflächen (17) der Indizierungsblöcke (14) zusammenzuwirken.

## Claims

1. Cutting method for cutting a semi-finished moulding element (1) intended to yield segments (2) of a mould for moulding and vulcanizing tyres, the said moulding element (1) comprising a plurality of segments (2) originating from one and the same moulding operation, the said moulding element (1) comprising at least one pair of male securing members (3) on each side of a moulding face (4) intended to form the tread patterns in the tread of the tyre that is to be moulded, the said method comprising the following steps:
- aligning and indexing the semi-finished moulding element (1) on the securing support (10) using indexing references (14, 15);
- clamping the semi-finished moulding element (1) on a securing support (10) provided with female securing members (12) corresponding to those of the moulding element (10), by means of the male (3) and female (12) securing members;
- placing the securing support (10) on a cutting machine;
- cutting the segments (2) from each other, at the junction between between two adjacent using the cutting machine.

2. Cutting method according to Claim 1, in which the male securing members (3) are studs comprising dovetail-shaped cutouts extending radially towards the inside of the moulding elements (1).

3. Cutting method according to one of Claims 1 and 2, in which the female securing members (12) comprise dovetail-shaped cutouts extending radially towards the inside of the moulding elements (1).

4. Cutting method according to one of Claims 1 to 3, in which the indexing references of the securing support (10) comprise at least two indexing blocks (14) provided with an indexing notch (15) that is accurately located with respect to the support (10) .

5. Cutting method according to Claim 4, in which the indexing references of the semi-finished moulding element (1) comprise an indexing finger (5) to be inserted into the notch (15) of the indexing block (14) that indexes the support (10).

6. Cutting method according to one of Claims 1 to 5, in which the cutting of the segments is performed using a very high pressure water jet.

7. Cutting method according to one of Claims 1 to 6, moreover comprising a machining step, following the cutting step, in which machining step the surplus material between the segments is removed.

8. Cutting method according to Claim 7, in which, during the step of machining a segment, the latter is secured to the machine tool by means of securing members (3) provided with dovetail-shaped cutouts.

9. Semi-finished moulding element (1) comprising:
- a moulding face (4) comprising patterns intended for moulding the tread patterns of a tyre tread;
- securing members (3) on each side of the moulding face;
- indexing fingers (5);
- a plurality of segments (2) of a mould for moulding and vulcanizing tyres, two adjacent segments being connected by a junction, said segments intended to be cut from one another using the cutting method according to one of Claims 1 to 8 .

10. Semi-finished moulding element (1) according to Claim 9, in which each segment (2) comprises a pair of securing members (3) which is intended for individually securing each segment to a machine tool for a post-cutting machining step.

11. Semi-finished moulding element (1) according to one of Claims 9 and 10, in which each segment (2) comprises a pair of reference surfaces (6) which are intended to collaborate with the bearing surfaces (17) of the indexing blocks (14).
